# EUROPEAN PATENT APPLICATION

(11) **EP 4 556 698 A1**
(43) Date of publication of application: **21.05.2025**
(21) Application number: 24206201.6
(22) Date of filing: 11.10.2024
(51) Int. Cl.: F02C 6/08

(54) **TURBINE COOLING AIR PRESSURE BOOST SYSTEM**

(30) Priority: 02.11.2023 US 202318386381
(71) Applicant: RTX Corporation, Farmington, CT 06032 (US)
(72) Inventor: Glahn, Jorn A., Manchester, 06042 (US); Liang, Kimberly J., Bethany, 06524 (US); Hanlon, Christopher J., Sturbridge, 01566 (US)
(74) Representative: Schmitt-Nilson Schraud Waibel Wohlfrom Patentanwälte Partnerschaft mbB

(57) **Abstract**

An electrically boosted cooling air system including a high pressure compressor; at least one cooling air supply line coupling the high pressure compressor with at least one of a high pressure turbine and a low pressure turbine; and an electrically powered centrifugal compressor fluidly coupled with the at least one cooling air supply line; wherein the electrically powered centrifugal compressor is configured to provide at least one of a pressure increase and a flow rate increase for cooling air supplied from the high pressure compressor.

## Description

This application is a continuation-in-part of US Application Serial No. 18/086,755 filed December 22, 2022.

The present disclosure is directed to the improved cooling air system for gas turbines including electrically boosted turbine cooling air.

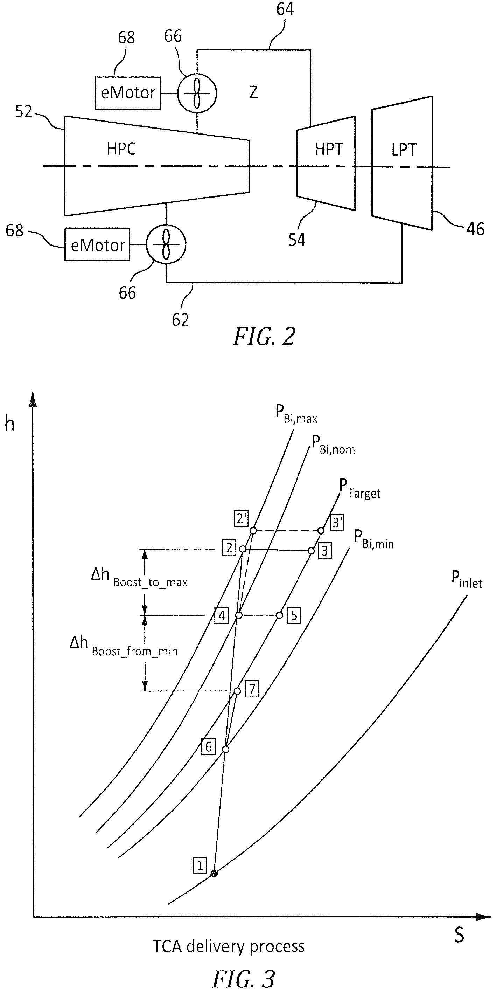

Cooling flows in aero-engines are typically sized at Max Take-off Hot Day operating conditions. Source locations from which cooling flows are taken off the compression system are driven by airfoil supply pressure requirements, which include margins for uncertainty and variation in order to ensure positive cooling flow against gas path sink pressures, as well as pressure losses incurred in getting cooling air to the airfoil. The latter accounts for bleed off-take losses, pipe pressure loss, and meter losses in addition to recognizing that only discrete bleed locations are available due to the finite number of compression stages. As a result, the bleed supply pressure significantly exceeds the pressure target (see Figure 2, nominal process, 2 - 3).

Past approaches towards tailoring cooling flows at cruise conditions to actual requirements involve throttling. With throttling strategies valves are placed in the supply line in order to reduce available flow area and, therefore, flow rate. While the flow rate reduction is beneficial for the cycle, the process per se creates losses and can be inefficient compared to delivering lower flow rates from just the right source and boosting flow and pressure at the few conditions that have higher demands.

Hybrid electric propulsion concepts have been built around power assist ideas that optimize the turbomachinery cycle closer to cruise conditions and use electrical power as a supplement at take-off or max climb conditions. Furthermore, concepts have been proposed that share electrical loads and, therefore, shaft horsepower extractions between the high and the low spool and between both engines on an aircraft. A consequence of that is a wider variation in turbine sink pressures compared to a fixed cycle. Consequently, a fixed area system in a variable cycle would have to be sized for the most limiting condition, which leads to inefficiencies at all other operating points.

In accordance with the present disclosure, there is provided an electrically boosted cooling air system comprising a high pressure compressor; at least one cooling air supply line coupling the high pressure compressor with at least one of a high pressure turbine and a low pressure turbine; and an electrically powered centrifugal compressor fluidly coupled with the at least one cooling air supply line; wherein the electrically powered centrifugal compressor is configured to provide at least one of a pressure increase and a flow rate increase for cooling air supplied from the high pressure compressor.

Particular embodiments further may include at least one, or a plurality of, the following optional features, alone or in combination with each other:

A further embodiment of any of the foregoing embodiments may additionally and/or alternatively include the at least one cooling air supply line includes a first cooling air supply line fluidly coupled between the high pressure compressor and the high pressure turbine.

A further embodiment of any of the foregoing embodiments may additionally and/or alternatively include the at least one cooling air supply line includes a second cooling air supply line fluidly coupled between the high pressure compressor and the low pressure turbine.

A further embodiment of any of the foregoing embodiments may additionally and/or alternatively include the first cooling air supply line is fluidly coupled with at least one of the high pressure compressor sixth stage, seventh stage, eighth stage, ninth stage and tenth stage.

A further embodiment of any of the foregoing embodiments may additionally and/or alternatively include the second cooling air supply line is fluidly coupled with at least one of the high pressure compressor second stage, third stage and fourth stage.

A further embodiment of any of the foregoing embodiments may additionally and/or alternatively include the electrically powered centrifugal compressor is configured to provide additional cooling air pressure and cooling air flow rate responsive to a predetermined gas turbine engine demand for cooling air.

A further embodiment of any of the foregoing embodiments may additionally and/or alternatively include the predetermined gas turbine engine demand for cooling air is selected from the group consisting of a power demand above a cruise operation condition; an off-normal engine operation condition, a certification testing engine operation condition; and a gap in cooling air source pressure.

In accordance with the present disclosure, there is provided a gas turbine engine with electrically boosted cooling air system comprising a high pressure compressor; a high pressure turbine; a low pressure turbine; a first cooling air supply line fluidly coupled between the high pressure compressor and the high pressure turbine; a second cooling air supply line fluidly coupled between the high pressure compressor and the low pressure turbine; and an electrically powered centrifugal compressor fluidly coupled with at least one of the first cooling air supply line and the second cooling air supply line; wherein the electrically powered centrifugal compressor is configured to provide at least one of a pressure increase and a flow rate increase for cooling air supplied from the high pressure compressor.

Particular embodiments further may include at least one, or a plurality of, the following optional features, alone or in combination with each other:

A further embodiment of any of the foregoing embodiments may additionally and/or alternatively include at least one of the first cooling air supply line and the second cooling air supply line are fluidly coupled with a bleed air source having a pressure below a predetermined value; wherein the electrically powered centrifugal compressor is configured to increase the pressure of the cooling air to the predetermined value.

A further embodiment of any of the foregoing embodiments may additionally and/or alternatively include the electrically powered centrifugal compressor is configured to adjust cooling air supply pressure and flow rate requirements responsive to changes in turbine sink pressures, the turbine sink pressures being responsive to variable shaft horsepower extractions due to spool and engine load sharing.

A further embodiment of any of the foregoing embodiments may additionally and/or alternatively include the electrically powered centrifugal compressor is fluidly coupled with the first cooling air supply line and another electrically powered centrifugal compressor is fluidly coupled with the second cooling air supply line.

A further embodiment of any of the foregoing embodiments may additionally and/or alternatively include the electrically powered centrifugal compressor is configured to be rotated by the cooling air flowing through at least one of the first cooling air supply line and the second cooling air supply line to generate electrical power.

A further embodiment of any of the foregoing embodiments may additionally and/or alternatively include the electrically powered centrifugal compressor is configured to operate during a hot shutdown engine condition to provide ventilation to the gas turbine engine.

In accordance with the present disclosure, there is provided a process for electrically boosting a gas turbine cooling air system comprising fluidly coupling at least one cooling air supply line between a high pressure compressor and at least one of a high pressure turbine and a low pressure turbine; fluidly coupling an electrically powered centrifugal compressor with the at least one cooling air supply line; providing at least one of a pressure increase and a flow rate increase with the electrically powered centrifugal compressor for cooling air supplied from the high pressure compressor.

Particular embodiments further may include at least one, or a plurality of, the following optional features, alone or in combination with each other:

A further embodiment of any of the foregoing embodiments may additionally and/or alternatively include the process further comprising providing additional cooling air pressure and cooling air flow rate with the electrically powered centrifugal compressor responsive to a predetermined gas turbine engine demand for cooling air.

A further embodiment of any of the foregoing embodiments may additionally and/or alternatively include the predetermined gas turbine engine demand for cooling air is selected from the group consisting of a power demand above a cruise operation condition; an off-normal engine operation condition, a certification testing engine operation condition; and a gap in cooling air source pressure.

A further embodiment of any of the foregoing embodiments may additionally and/or alternatively include the process further comprising fluidly coupling the at least one cooling air supply line with a bleed air source having a pressure below a predetermined value; and increasing the pressure of the cooling air to the predetermined value employing the electrically powered centrifugal compressor.

A further embodiment of any of the foregoing embodiments may additionally and/or alternatively include the process further comprising adjusting a cooling air supply pressure and a flow rate requirement employing the electrically powered centrifugal compressor responsive to changes in turbine sink pressures, the turbine sink pressures being responsive to variable shaft horsepower extractions due to spool and engine load sharing.

A further embodiment of any of the foregoing embodiments may additionally and/or alternatively include the process further comprising generating electrical power employing the electrically powered centrifugal compressor configured to be rotated by the cooling air flowing through the cooling air supply line.

A further embodiment of any of the foregoing embodiments may additionally and/or alternatively include the process further comprising providing ventilation to the gas turbine engine; and operating the electrically powered centrifugal compressor during a hot shutdown engine condition.

Other details of the electrically boosted turbine cooling air system are set forth in the following detailed description and the accompanying drawings wherein like reference numerals depict like elements.
Fig. 1 is a cross section view of an exemplary gas turbine engine.
Fig. 2 is a schematic representation of an electrically boosted cooling system.
Fig. 3 is an exemplary h-s diagram with pressures indicated in the figure representing pressures normalized to the maximum system pressures for each operating condition to enable comparisons across operating conditions.
Fig. 4 is a schematic representation of an exemplary electrically boosted cooling system.

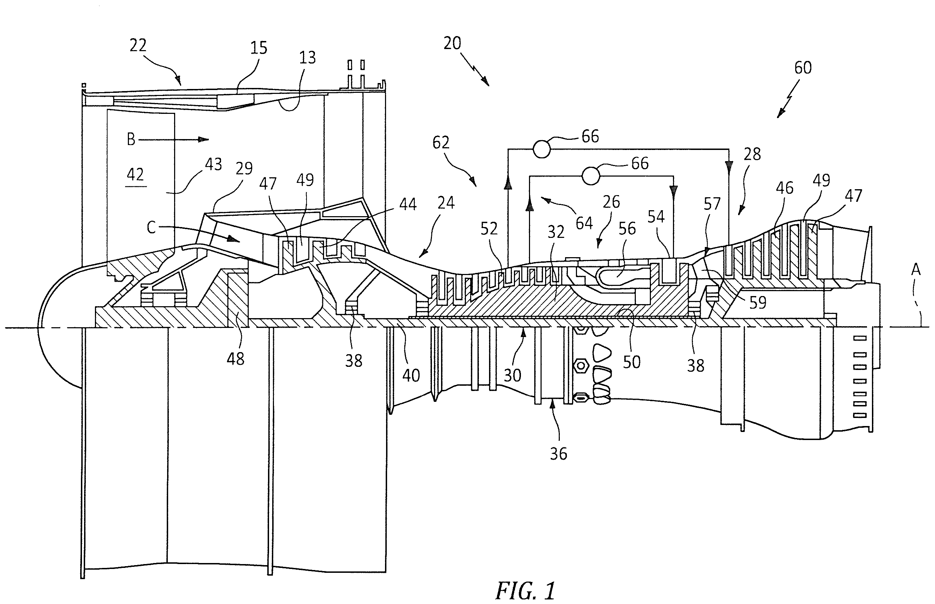

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of pounds-mass per hour lbm/hr of fuel flow rate being burned divided by pounds-force Ibf of thrust the engine produces at that minimum point. The engine parameters described above, and those in the next paragraph are measured at this condition unless otherwise specified.

"Low fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The low fan pressure ratio is a spanwise average of the pressure ratios measured across the fan blade 43 alone over radial positions corresponding to the distance. The low fan pressure ratio can be less than or equal to 1.45, or more narrowly greater than or equal to 1.25, such as between 1.30 and 1.40. "Low corrected fan tip speed" is the actual fan tip speed in ft/sec divided by an industry standard temperature correction of [(Tram °R) / (518.7 °R)]^{0.5}. The "low corrected fan tip speed" can be less than or equal to 1150.0 ft / second (350.5 meters/second), and greater than or equal to 1000.0 ft / second (304.8 meters/second).

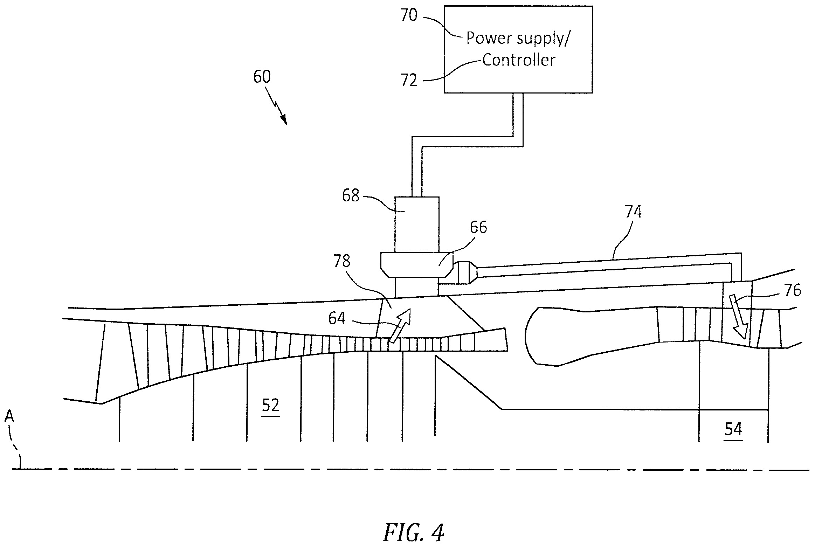

Referring also to Fig. 2 through Fig. 4 an electrically boosted turbine cooling air system 60 is shown. The electrically boosted turbine cooling air system 60 utilizes existing secondary sources for cooling air. For example, the electrically boosted turbine cooling air system 60 can utilize high pressure compressor third stage air 62 to supply the low pressure turbine 46. Additionally, the electrically boosted turbine cooling air system 60 can utilize high pressure compressor sixth and eighth stage air 64 to supply the high pressure turbine 54. In an exemplary embodiment the seventh, and ninth, eighth and tenth stage air of the high pressure compressor 52 to supply the high pressure turbine 54, or each of the 6th, 7th, 8th, 9th or 10th individually can be employed. Other HPC architectures can be utilized to provide the cooling air system 60. For example, second, third, or fourth stages can be utilized in an embodiment of a compressor 52 with 9 stages. In that case, the cooling air system 60 may deploy stages 4 out of 9 as opposed to 3 out of 8 stages. It is contemplated that other alternative secondary sources can provide cooling air to the low pressure turbine 46 and/or high pressure turbine 54.

The electrically boosted turbine cooling air system 60 employs at least one electrically powered centrifugal compressor 66. The electrically powered centrifugal compressor 66 is driven by an electric motor 68.

The electrically boosted turbine cooling air system 60 utilizes electrical power from a power supply 70 regulated by a controller 72 to optimize the cooling air delivery to the high pressure turbine 54 and low pressure turbine 46 cooling circuits. The electrically boosted turbine cooling air system 60 can provide additional cooling air pressure and cooling air flow rate responsive to a control parameter determined by the controller 72, such as a Full Authority Digital Engine Control (FADEC) alone or in combination with an on-board heat transfer model that determines cooling demand. The Full Authority Digital Engine Control is a system consisting of a digital computer, called an electronic engine controller (EEC) or engine control unit (ECU), and its related accessories that control all aspects of aircraft engine performance. The electrically boosted turbine cooling air system 60 also provides the flexibility to adjust cooling requirements to changes in turbine sink pressures that could be driven by variable shaft horsepower extractions due to spool and engine load sharing.

The electrically boosted turbine cooling air system 60 is configured by sizing high pressure turbine cooling air flows for the high pressure turbine 54 (HCA) and low pressure turbine 46 (LCA) for gas turbine engine cruise operating conditions and then boosting pressure and flow of the cooling air to meet higher power demands required under other gas turbine engine operating conditions. The cooling air pressure and flow can be boosted by integrating electrically-driven centrifugal compressors 66 in the supply lines 62, 64. The benefit will be a flow reduction for a given bleed location at engine cruise conditions. The centrifugal compressor 66 can be fluidly coupled with four turbine inlet air cooling pipes 74 from a manifold of a single centrifugal compressor 66. In an alternative embodiment, the cooling air system 60 can include four individual turbine inlet air cooling pipes 74 each equipped with a centrifugal compressor 66. The turbine inlet air cooling pipes 74 can be fluidly coupled with the 2^{nd} vane supply plenum 76. The centrifugal compressor 66 can be fluidly coupled with the bleed plenum 78.

Referring also to Fig. 3 h-s diagram, when the nominal turbine cooling air delivery is sized for max take-off engine conditions: the high pressure compressor compression phase is shown at 1 - 2; the bleed air off-take, pipe and meter losses are shown at 2 - 3.

When the cooling air system 60 is sized for engine cruise conditions accounting for the electrical boost to max take-off: the high pressure compressor compression is shown at 1 - 4; the bleed air off-take, pipe and meter losses are shown at 4 - 5; the electrically driven boost for max-take off is shown at 4 - 2'; and the max-take off bleed air off-take, pipe and meter loss are shown at 2' - 3'.

When the cooling air system 60 is sized for engine cruise conditions accounting for the electrical boost from a minimum supply: the high pressure compressor compression is shown at 1 - 6; the electrically driven boost to target (including line losses) is shown at 6 - 7; and the max-take off is achieved by providing more boost pressure (not shown).

The electrically boosted turbine cooling air system 60 can challenge current contributors to outflow margin requirements. An active electrically boosted turbine cooling air system 60 can react to off-nominal running conditions of the gas turbine engine 20, which is typically done for certification testing. As margin is taken out and lower delivery losses incur due to lower flow rates, an opportunity to source cooling flows from an earlier stage arises (Refer to Fig. 3, process 1 - 4 - 5 for cruise and 1 - 2' - 3' for high power).

A variation of that idea is that a lower bleed source could be selected and any gap in adequate source pressure would be closed with the boost system. For example, rather than metering down from a higher than needed pressure source, the electrically boosted turbine cooling air system 60 can boost from a lower (and cooler) pressure source to just the right level (see Figure 3, process 1 - 6 - 7). The benefit includes a more efficient internal air system even if the centrifugal compressor is less efficient than the turbomachinery - the trade will depend on the gap to requirements.

Specific to the (LCA) cooling air and low pressure turbine purge flow system, shut off flows at descent engine conditions could be entertained. In order to prevent ingestion of hot gas from the gas path into the rotor-stator wheel-space and subsequent overheating of the disk, the internal air system delivers cold purge air to the platform overlaps that minimizes or eliminates ingestion by acting as an air buffer. The purge air represents a necessary performance loss taken to ensure disk life requirements are met. A passive system would incur these losses even when system temperatures are low enough to not cause harm. The electrically powered centrifugal compressor 66 can be configured such that the purge flow is minimized or shut-off when not needed. The electrically powered centrifugal compressor 66 can be fluidly coupled such that the centrifugal compressor 66 in that system can windmill, be rotated by air flowing, and deliver power back to the batteries (not shown). Ingestion in low pressure turbine rim cavities and potentially the mid-turbine-frame 57 might be tolerable at those conditions.

In an exemplary embodiment, the centrifugal compressor 66 can be employed to boost the turbine inlet air cooling system as well as provide the function of rejecting unwanted debris, dirt and the like. The centrifugal compressor 66 is well suited to integrate with cyclonic separators to potentially couple the boosted turbine inlet air cooling system with a dirt rejection (air cleaning) feature (dual use). Centrifugal compressors 66 with high tangential momentum could serve as the basis to power the cyclonFFigic dirt separator and clean the air of particulate matter before the air enters the turbine.

A technical advantage of the disclosed cooling air system includes that an active air system can contribute to an optimization of hot shutdown management procedures, i.e., it can provide ventilation to the engine at any time.

Another technical advantage of the disclosed cooling air system includes as high and low spool shaft power extraction shifts up and down depending on how the engine and aircraft systems interact, the cooling air system can react to varying sink pressures that depend on spool work spits.

Another technical advantage of the disclosed cooling air system includes designing the air system to react and to be optimized, rather than accepting inefficiencies that would result from having to design to the worst-case load sharing condition.

Another technical advantage of the disclosed cooling air system includes the comparison of a single-stage inline, ducted fan being limited to a pressure ratio of about 1.2 whereas the centrifugal compressor is suited to meet pressure a ratio of greater than 1.2.

Another technical advantage of the disclosed cooling air system includes the centrifugal compressor has broad pressure ratio vs. flow rate characteristic and enables more robust operating line along the highest efficiency and can be separated from the stall line.

There has been provided an electrically boosted turbine cooling air system. While the electrically boosted turbine cooling air system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An electrically boosted cooling air system comprising:
a high pressure compressor;
at least one cooling air supply line coupling the high pressure compressor with at least one of a high pressure turbine and a low pressure turbine; and
an electrically powered centrifugal compressor fluidly coupled with the at least one cooling air supply line; wherein the electrically powered centrifugal compressor is configured to provide at least one of a pressure increase and a flow rate increase for cooling air supplied from the high pressure compressor.

2. The electrically boosted cooling air system according to claim 1, wherein said at least one cooling air supply line includes a first cooling air supply line fluidly coupled between the high pressure compressor and the high pressure turbine.

3. The electrically boosted cooling air system according to claim 1 or 2, wherein said at least one cooling air supply line includes a second cooling air supply line fluidly coupled between the high pressure compressor and the low pressure turbine.

4. The electrically boosted cooling air system according to claim 2 or 3, wherein said first cooling air supply line is fluidly coupled with at least one of the high pressure compressor sixth stage, seventh stage, eighth stage, ninth stage and tenth stage; and/or
wherein said second cooling air supply line is fluidly coupled with at least one of the high pressure compressor second stage, third stage and fourth stage.

5. The electrically boosted cooling air system according to any of claims 1 to 4, wherein said electrically powered centrifugal compressor is configured to provide additional cooling air pressure and cooling air flow rate responsive to a predetermined gas turbine engine demand for cooling air; and/or
wherein said predetermined gas turbine engine demand for cooling air is selected from the group consisting of a power demand above a cruise operation condition; an off-normal engine operation condition, a certification testing engine operation condition; and a gap in cooling air source pressure.

6. A gas turbine engine comprising the electrically boosted cooling air system according to any of claims 1 to 5, wherein the gas turbine engine comprises:
a high pressure compressor;
a high pressure turbine;
a low pressure turbine;
a first cooling air supply line fluidly coupled between the high pressure compressor and the high pressure turbine;
a second cooling air supply line fluidly coupled between the high pressure compressor and the low pressure turbine; and
an electrically powered centrifugal compressor fluidly coupled with at least one of the first cooling air supply line and the second cooling air supply line; wherein the electrically powered centrifugal compressor is configured to provide at least one of a pressure increase and a flow rate increase for cooling air supplied from the high pressure compressor.

7. The gas turbine engine with electrically boosted cooling air system according to claim 6, wherein at least one of the first cooling air supply line and the second cooling air supply line are fluidly coupled with a bleed air source having a pressure below a predetermined value; wherein said electrically powered centrifugal compressor is configured to increase the pressure of the cooling air to the predetermined value; and/or
wherein the electrically powered centrifugal compressor is configured to adjust cooling air supply pressure and flow rate requirements responsive to changes in turbine sink pressures, said turbine sink pressures being responsive to variable shaft horsepower extractions due to spool and engine load sharing.

8. The gas turbine engine with electrically boosted cooling air system according to claim 6 or 7, wherein the electrically powered centrifugal compressor is fluidly coupled with the first cooling air supply line and another electrically powered centrifugal compressor is fluidly coupled with the second cooling air supply line.

9. The gas turbine engine with electrically boosted cooling air system according to any of claims 6 to 8, wherein said electrically powered centrifugal compressor is configured to be rotated by the cooling air flowing through at least one of the first cooling air supply line and the second cooling air supply line to generate electrical power.

10. The gas turbine engine with electrically boosted cooling air system according to any of claims 6 to 9, wherein the electrically powered centrifugal compressor is configured to operate during a hot shutdown engine condition to provide ventilation to the gas turbine engine.

11. A process for electrically boosting a gas turbine cooling air system comprising:
fluidly coupling at least one cooling air supply line between a high pressure compressor and at least one of a high pressure turbine and a low pressure turbine;
fluidly coupling an electrically powered centrifugal compressor with the at least one cooling air supply line;
providing at least one of a pressure increase and a flow rate increase with the electrically powered centrifugal compressor for cooling air supplied from the high pressure compressor.

12. The process of claim 11, further comprising:
providing additional cooling air pressure and cooling air flow rate with the electrically powered centrifugal compressor responsive to a predetermined gas turbine engine demand for cooling air;
wherein particularly said predetermined gas turbine engine demand for cooling air is selected from the group consisting of a power demand above a cruise operation condition; an off-normal engine operation condition, a certification testing engine operation condition; and a gap in cooling air source pressure.

13. The process of claim 11 or 12, further comprising:
fluidly coupling the at least one cooling air supply line with a bleed air source having a pressure below a predetermined value; and
increasing the pressure of the cooling air to the predetermined value employing said electrically powered centrifugal compressor.

14. The process of any of claims 11 to 13, further comprising:
adjusting a cooling air supply pressure and a flow rate requirement employing said electrically powered centrifugal compressor responsive to changes in turbine sink pressures, said turbine sink pressures being responsive to variable shaft horsepower extractions due to spool and engine load sharing.

15. The process of any of claims 11 to 14, further comprising:
generating electrical power employing said electrically powered centrifugal compressor configured to be rotated by the cooling air flowing through the cooling air supply line; and/or
further comprising:
providing ventilation to the gas turbine engine; and
operating the electrically powered centrifugal compressor during a hot shutdown engine condition.
